# EUROPEAN PATENT APPLICATION

(11) **EP 2 337 342 A1**
(43) Date of publication of application: **22.06.2011**
(21) Application number: 10189500.1
(22) Date of filing: 29.10.2010
(51) Int. Cl.: H04N 5/46, H04N 5/50

(54) **Method and apparatus for managing digital broadcasting channels**

(30) Priority: 05.11.2009 KR 20090106653
(71) Applicant: Samsung Electronics Co., Ltd., Yeongtong-gu Suwon-si, Gyeonggi-do (KR)
(72) Inventor: Lee, Dong-hoon, Gyeonggi-do (KR); Kim, Ju-yeun, Gyeonggi-do (KR); Kim, Ki-bo, Gyeonggi-do (KR)
(74) Representative: Walaski, Jan Filip

(57) **Abstract**

Method and apparatus for managing channels for a plurality of digital broadcasting methods. The method of managing channels comprises: detecting broadcasting channels which correspond to at least one broadcasting method predetermined from a plurality of digital broadcasting methods with respect to each physical channel in a predetermined reception range; and storing channel information of the detected broadcasting channels in a memory. Accordingly, an efficient and convenient method of managing channels is provided in a plurality of digital broadcasting standards.

## Description

The present invention relates to managing digital broadcasting channels, and more particularly, to managing channels for a plurality of digital broadcasting methods.

European digital broadcasting is performed according to second generation standards including DVB-T2, DVB-C2, and DVB-S2, which developed from first generation standards including DVB-T, which is a terrestrial broadcasting standard, DVB-C, which is a cable broadcasting standard, and DVB-S, which is a satellite broadcasting standard. According to the second generation standards, about 30% through 50% more data may be transmitted to the same frequency band as compared with the first generation standards. Also, using the second generation standards, a plurality of transport streams (TS) may be transmitted through one physical channel at the same time. However, backward and forward compatibility may not be supported and thus first generation digital broadcasting may not be viewed using a second generation standard receiver, and vice versa. Moreover, there are various digital broadcasting standards, including ATSC-M/H and 8-VSB in the U.S., ISDB-T in Japan, and DTMB in China, and there is no cross-compatibility between them.

Accordingly, unlike a general receiver, which supports only one digital broadcasting standard, a receiver that simultaneously supports various broadcasting standards is needed.

Exemplary embodiments provide a receiver that simultaneously supports various broadcasting standards and may manage channels using different channel management methods and provide a method of managing channels in a digital broadcasting receiver that supports various digital broadcasting methods.

According to an aspect of an exemplary embodiment, there is provided a method of managing channels in a digital broadcasting receiver. The method includes selecting at least one broadcasting method from a number of broadcasting methods with respect to each physical channel in a predetermined reception range; detecting broadcasting channels which correspond to the at least one selected broadcasting method; and outputting channel information of the detected broadcasting channels.

The at least one selected broadcasting method may be determined by input from a user.

The detecting the broadcasting channels may further include: receiving a broadcasting signal through the each of the physical channels; and detecting the broadcasting channels which correspond to the at least one selected broadcasting method in the broadcasting signal.

The detecting the broadcasting channels may include: receiving channel information data from another digital broadcasting receiver by a network; and detecting broadcasting channels which correspond to the at least one selected broadcasting method in the channel information data.

The outputting the channel information may include: storing in a memory only channel information of broadcasting channels selected according to a predetermined condition from the detected broadcasting channels.

The predetermined condition may include at least one of a broadcasting method, resolution, mobility, modulation parameters, signal quality, content characteristics, and whether a broadcasting channel is a user preferred channel.

The content characteristics may include at least one of a content type, a rating of the content, a language of the content, recommended viewers for the content, charge of the content, and whether the content is for terrestrial broadcasting.

The predetermined condition may be determined by user's input.

If broadcasting channels with same content are detected using different broadcasting methods, only channel information of broadcasting channels selected according to a predetermined condition from the broadcasting channels with the same content may be output.

The previously determined condition may include at least one of a broadcasting method, resolution, mobility, modulation parameters, and signal quality, to which a priority order is provided.

If a broadcasting channel with same content as a broadcasting channel previously output is detected, at least part of channel information of the broadcasting channel previously output may be output as channel information of the detected broadcasting channel.

The channel information may include a channel number or whether a broadcasting channel is a user preferred channel.

If a number of broadcasting channels with a same content as a broadcasting channel previously output are detected, at least part of channel information of the broadcasting channel previously output may be output as channel information of a broadcasting channel selected according to a predetermined condition from the detected broadcasting channels.

The predetermined condition may include at least one of a broadcasting method, resolution, mobility, modulation parameters, and signal quality, to which a priority order is provided.

If a broadcasting channel with same content as a broadcasting channel previously output is not detected, at least part of channel information of the broadcasting channels previously stored may be stored as channel information of the broadcasting channel with content similar to the broadcasting channel previously stored.

If a broadcasting channel which corresponds to the at least one predetermined broadcasting method is detected in a broadcasting signal of a current physical channel, omitting in the current physical channel, detection of broadcasting channels which correspond to another broadcasting method.

The method may further include determining whether a current broadcasting signal or a current stream satisfies a predetermined condition.

If the current broadcasting signal or the current stream does not satisfy the predetermined condition, stopping the detection of the broadcasting channels for the current broadcasting signal or the current stream.

If the current broadcasting signal or the current stream does not satisfy the predetermined condition, omitting detection of broadcasting channels corresponding to the predetermined condition in the current broadcasting signal or the current stream.

The predetermined condition may include at least one of a broadcasting method, resolution, mobility, modulation parameters, and signal quality.

A broadcasting method of the current broadcasting signal may be determined by using a correlation property of a guard interval and a useful symbol interval of the current broadcasting signal. A broadcasting method of the current broadcasting signal may be determined by detecting a previously determined synchronization signal in the current broadcasting signal. A broadcasting method of the current broadcasting signal may be determined by detecting a predetermined pseudo-random noise sequence (PN sequence) in the current broadcasting signal.

Whether the current broadcasting signal corresponds to a specific broadcasting method may be determined according to a predetermined order of broadcasting methods.

Broadcasting channels may be detected according to a predetermined order of broadcasting methods.

The predetermined order of broadcasting methods may be determined by at least one of broadcasting method detecting speed, broadcasting method distinguishing methods, a use ratio of broadcasting methods, a location of the digital broadcasting receiver, and the broadcasting methods of broadcasting channels previously stored in the memory.

The method may further include outputting control information of the detected broadcasting channels.

Control information of the detected broadcasting channels may be stored in a memory.

The control information may include at least one of a network identifier, a broadcasting method identifier, a number of transmission streams, a transmission stream identifier, a number of broadcasting channels, a broadcasting channel identifier, content characteristics, resolution, mobility, modulation parameters, and signal quality.

The modulation parameters may include at least one from the group consisting of an FFT size, a guard interval size, a pilot pattern, SISO/MISO information, a number of symbols forming a T2 frame, a modulation method, hierarchy information, and an inner code rate.

The method may further include outputting the control information stored in the memory when a channel is changed or a command for outputting channel information is input. The method may further include changing a channel by using the control information stored in the memory.

The method may further include: determining whether a channel can be changed by using the control information stored in the memory; and selectively changing a channel by using control information of the received broadcasting signal according to a result of the determining.

An activity may be designated for each of the detected broadcasting channels according to a predetermined condition and is stored in the memory; and the method may further include changing to an activated broadcasting channel when a command for channel up/down is input.

The predetermined condition may include at least one of a broadcasting method, resolution, mobility, modulation parameters, signal quality, content characteristics, and whether a broadcasting channel is a user preferred channel.

The method may further include designating a broadcasting channel to be inactivated when a command for deleting the broadcasting channel is input. The detecting may be automatically performed regardless of user command when a previously determined condition is satisfied.

The previously determined condition may include at least one of a channel information change, a change of a location of the digital broadcasting receiver, expiration of previously determined period, turning off of the digital broadcasting receiver, interruption of power supply of the digital broadcasting receiver, and idleness of at least one tuner.

Whether channel information has been changed may be determined by comparing channel information output with channel information of the received broadcasting signal or receiving information indicating that channel information has been changed.

The method may further include reproducing a broadcasting channel corresponding to content that was being reproduced before the detecting.

The detecting may be stopped when a broadcasting channel corresponding to content that was being reproduced before the detecting is found.

The detecting may be stopped when broadcasting channels corresponding to user preferred channels are found.

Channel numbers may be allocated to the detected broadcasting channels according to a predetermined condition and are stored in a memory.

The previously determined condition may include at least one of a broadcasting method, resolution, mobility, modulation parameters, signal quality, content characteristics, and whether a broadcasting channel is a user preferred channel, to which a priority order is provided.

Groups are allocated to the detected broadcasting channels according to a predetermined condition and are stored in a memory.

The predetermined condition may include at least one of a broadcasting method, resolution, mobility, modulation parameters, signal quality, content characteristics, and whether a broadcasting channel is a user preferred channel, to which a priority order is provided.

Channel numbers may be allocated to the detected broadcasting channels according to a predetermined channel number allocation condition and stored in a memory and the channel numbers may include a group number and a broadcasting channel number in a group.

The method may further include receiving user preferred groups, where the broadcasting channels which correspond to the user preferred groups are automatically designated as user preferred channels. The method may further include receiving user information, where the detecting and the outputting are performed based on the user information. The user information may include at least one of a name, a gender, an age, an address, a job, a country, a language, program preference, and a user group.

Broadcasting channels may be detected by automatically determining according to the user information, at least one of broadcasting methods to be detected, detecting order of broadcasting methods, contents to be detected, a receiver providing channel information data, and automatic detecting condition.

Channel information may be stored in a memory by automatically determining according to the user information at least one of broadcasting channels to be stored, duplicated contents selection condition, condition for maintaining existing channel information, channel numbers, condition for allocating channel numbers, user preferred channels, condition for allocating channel groups, condition for allocating channel group numbers, and user preferred channel groups.

The method may further include receiving user information about a plurality of users, and separate channel information for each user may be stored in the memory.

The method may further include receiving channel setting information from another digital broadcasting receiver by a network or from a removable storage medium wherein the detecting and the outputting are performed based on the channel setting information.

The channel setting information may include at least one of broadcasting methods to be detected, detecting order of broadcasting methods, contents to be detected, a receiver providing channel information data, automatic detecting condition, broadcasting channels to be stored, duplicated contents selection condition, condition for maintaining existing channel information, channel numbers, condition for allocating channel numbers, user preferred channels, condition for allocating channel groups, condition for allocating channel group numbers, user preferred channel groups, and user information.

According to another aspect of the present invention, there is provided a digital broadcasting receiver including: a selection unit which selects at least one broadcasting method from a plurality of digital broadcasting methods with respect to each of a plurality of physical channels in a predetermined reception range; a detecting unit which detects broadcasting channels which correspond to the least one broadcasting method selected by the selection unit; and a controller which outputs channel information of the detected broadcasting channels.

The digital broadcasting receiver may further include a user input unit for receiving input from a user, where the user input unit receives the at least one selected broadcasting method.

The digital broadcasting receiver may further include a broadcasting signal receiving unit which receives a broadcasting signal through said each of the physical channels, wherein the detecting unit detects the broadcasting channels which correspond to the at least one selected broadcasting method in the broadcasting signal.

The digital broadcasting receiver may further include a channel information receiving unit which receives channel information data from another digital broadcasting receiver by a network and where the detecting unit detects broadcasting channels which correspond to the at least one selected broadcasting method in the channel information data.

The controller may output only channel information of broadcasting channels selected according to a predetermined condition from the detected broadcasting channels.

The controller, when broadcasting channels with same content are detected using different broadcasting methods, may output only channel information of broadcasting channels selected according to a predetermined condition from the broadcasting channels with the same content.

The controller, when a broadcasting channel with same content as a broadcasting channel previously output by the controller is detected, output at least part of channel information of the broadcasting channel previously output as channel information of the detected broadcasting channel.

The detecting unit may determine whether a current broadcasting signal or a current stream satisfies a predetermined condition.

The detecting unit may stop detecting for the current broadcasting signal or the current stream, when the current broadcasting signal or the current stream does not satisfy the predetermined condition.

The detecting unit may omit detecting broadcasting channels corresponding to the previously determined condition in the current broadcasting signal or the current stream, when the current broadcasting signal or the current stream does not satisfy the predetermined condition.

The controller may output control information of the detected broadcasting channels. The controller may store control information of the detected broadcasting channels in a memory. The controller may change a channel by using the control information stored in the memory.

According to another aspect of the present invention, there is provided a computer readable recording medium having embodied thereon a computer program for executing the method above.

The above and/or other aspects will become more apparent by describing in detail exemplary embodiments thereof with reference to the attached drawings, in which:
FIG. 1 is an example of a configuration of channels supporting a plurality of broadcasting standards;
FIG. 2 illustrates a channel scan menu of a general terrestrial/ cable broadcasting receiver supporting only one digital broadcasting standard;
FIGS. 3A and 3B illustrate channel scan menus of a digital broadcasting receiver according to an exemplary embodiment;
FIG. 4 is a table showing maximum rates of transmission using DVB-T2;
FIG. 5 illustrates a user selection menu for duplicated contents according to an exemplary embodiment;
FIG. 6 illustrates a user selection menu for a broadcasting channel to be stored according to an exemplary embodiment;
FIG. 7 illustrates a user selection menu for a broadcasting channel in which a channel number is to be maintained according to an exemplary embodiment;
FIG. 8 schematically illustrates a method of distinguishing broadcasting signals using European terrestrial broadcasting standards DVB-T or DVB-T2, or European cable broadcasting standard DVB-C2 according to an exemplary embodiment;
FIG. 9 is a flowchart illustrating a method of managing channels according to an exemplary embodiment; and
FIG. 10 is a block diagram of a digital broadcasting receiver according to an exemplary embodiment.

Hereinafter, exemplary embodiments will be described in detail with reference to the accompanying drawings. In the description of exemplary embodiments, the detailed descriptions of well-known technologies and structures may be omitted so as not to hinder the understanding of the inventive concept.

In the drawings, like reference numerals denote like elements and thus description thereof is not repeated, although illustrated in different drawings. If necessary, description of the elements in the drawings may be used for description of the other drawings. Also, sizes of elements are exaggerated for clarity.

For convenience of description, a digital broadcasting receiver that supports DVB-T and DVB-T2 is mainly described. However, the present invention may be applied to all of future and present digital broadcasting standards.

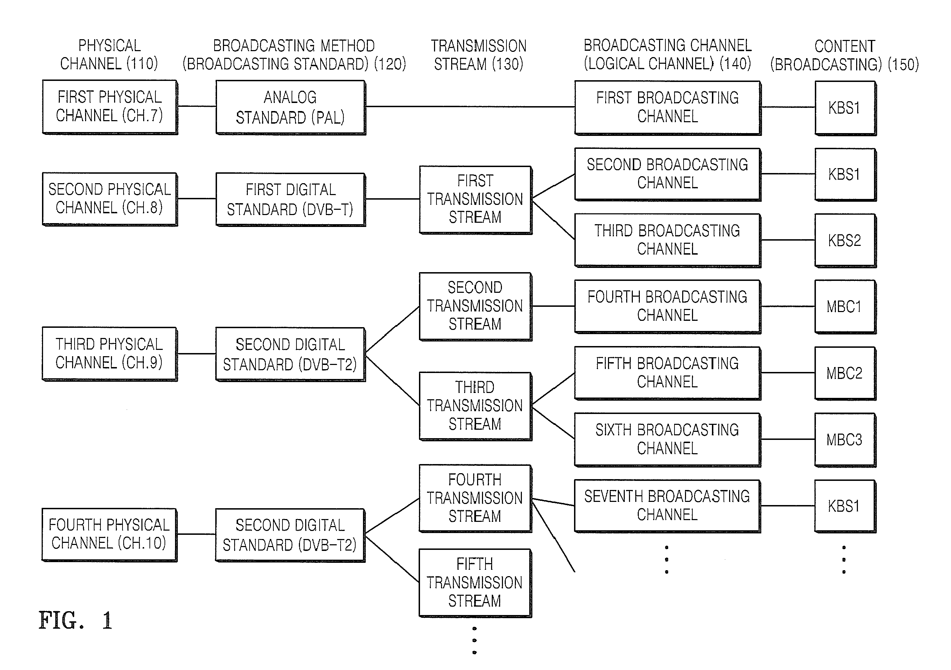

FIG. 1 is an example of a configuration of channels supporting a plurality of broadcasting standards 120.

Referring to FIG. 1, using a general analog broadcasting standard, only one of broadcasting contents 150 may be transmitted through one physical channel 110. However, using a digital broadcasting standard, a plurality of broadcasting contents 150 may be transmitted through one physical channel 110 by using logical channels 140, that is, a plurality of lower channels that are each logically classified by a transmission stream or an elementary stream (ES). Here, the broadcasting contents 150 denote broadcasting contents produced and transmitted by a broadcasting station. In general, the term 'channel' may indicate all the physical channels 110, the logical channels 140, and the broadcasting contents 150 and thus the physical channels 110, the logical channels 140, and the broadcasting contents 150 are called physical channels, broadcasting channels, and contents, respectively, for distinguishing between them.

As described above, using a second broadcasting standard, a plurality of transmission streams 130 may be transmitted through one physical channel 110, wherein each of the plurality of transmission streams 130 may include a plurality of broadcasting channels 140.

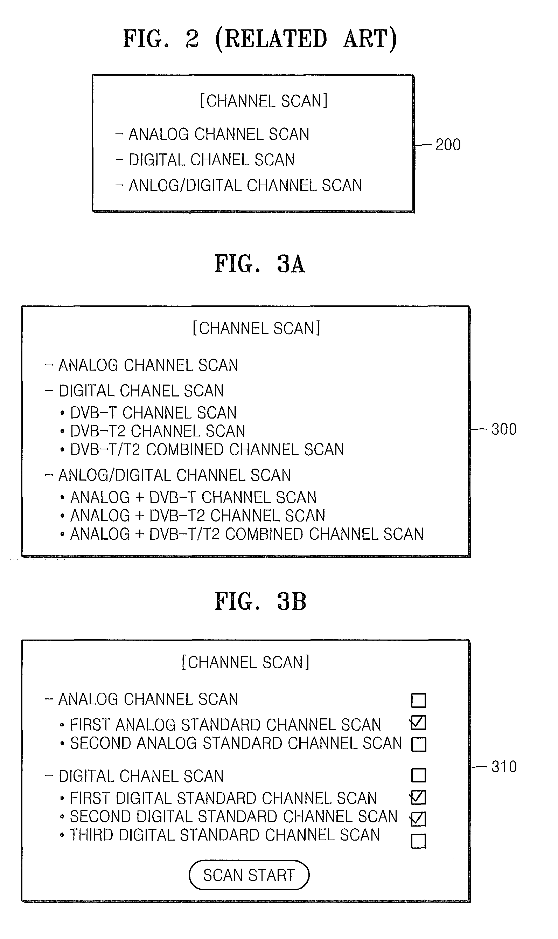

FIG. 2 illustrates a channel scan menu 200 of a general terrestrial/cable broadcasting receiver supporting only one digital broadcasting standard.

Referring to FIG. 2, the channel scan menu 200 of the general terrestrial/cable broadcasting receiver includes an analog channel scan, a digital channel scan, and an analog/digital channel scan. When a user selects the analog channel scan, only analog broadcasting channels are detected throughout a broadcasting band and the found broadcasting channels are stored. When a user selects the digital channel scan, only digital broadcasting channels are detected throughout a broadcasting band and the found broadcasting channels are stored. When a user selects the analog/digital channel scan, both analog broadcasting channels and digital broadcasting channels are detected throughout a broadcasting band and the found broadcasting contents are stored. When a scan is completed, the number of analog broadcasting channels found and/or the number of digital broadcasting channels found may be displayed.

A general receiver of the related art is designed based on the assumption that there is only one digital broadcasting standard supported and that only one transmission stream is transmitted through one physical channel. Accordingly, a function of detecting broadcasting channels using a desired standard from among a plurality of digital broadcasting standards is not provided.

FIGS. 3A and 3B respectively illustrate channel scan menus 300 and 310 of a digital broadcasting receiver according to an exemplary embodiment.

Referring to FIG. 3A, similarly to the channel scan menu 200 of the general terrestrial/cable broadcasting receiver, the channel scan menu 300 of FIG. 3A of a digital broadcasting receiver according to an exemplary embodiment includes an analog channel scan, a digital channel scan, and an analog/digital channel scan. However, the digital channel scan is divided into DVB-T channel scan, DVB-T2 channel scan, and DVB-T/T2 combined channel scan and any of these scans may be selected by a user.

According to exemplary embodiments, two or more analog broadcasting methods or three or more digital broadcasting methods may be supported. Also, according to exemplary embodiments, the channel scan menu 310 of FIG. 3B may be configured so that scans are performed according to broadcasting methods selected.

According to exemplary embodiments, a broadcasting method according to which a scan is to be performed may be selected by user's input or by another device connected through a network. Also, a broadcasting method according to which a scan is to be performed may be selected automatically by a receiver according to a particular criteria or may be selected during manufacturing of the receiver, as is the case with various selectable items described below.

According to exemplary embodiments, a broadcasting method to be detected may be selected according to a configuration of a DIP (dual in-line package) switch, instead of a menu. A DIP switch may be originally configured by a manufacturer or a distributor according to sales areas and may be reconfigured to a different configuration at a later time by a user.

According to exemplary embodiments, a broadcasting method used in an area where a receiver is located may be selected. The location of the receiver may be determined by using a global positioning system (GPS) or by receiving location information through a network. In general, a mobile receiver may adopt the former method and a home receiver may adopt the latter method. According to exemplary embodiments, a broadcasting method used in the area may be selected according to a voltage and/or a frequency of an alternating current power source applied to the receiver.

When a channel scan is started by a digital broadcasting receiver, a broadcasting signal for each physical channel in a reception range of the digital broadcasting receiver is received and broadcasting channels are detected according to the selected broadcasting method from the received broadcasting signal. According to exemplary embodiments, a method of moving on to a next physical channel after scanning has been performed for one physical channel with respect to all broadcasting methods selected or a method of moving on to a next broadcasting method after scanning as been performed for all physical channels in the reception range with respect to one broadcasting method may be adopted.

Channel information of the broadcasting channels that are found as a result of the detection is stored in a memory and the number of broadcasting channels detected for each broadcasting method may be output to a display device after the scanning is completed.

A digital broadcasting receiver according to another exemplary embodiment may receive channel information data from another digital broadcasting receiver by a network, instead of directly receiving broadcasting signals and performing a channel scan. Accordingly, if a new receiver is purchased, channel information of the previous receiver may be used without the need to newly detect broadcasting signals or channel information may be shared in a particular user group. According to exemplary embodiments, the received channel information data is stored in a memory or the broadcasting channels for the selected broadcasting method may be detected in the received channel information data and stored.

According to exemplary embodiments, all channel information of the broadcasting channels detected from the broadcasting signals or channel information data may be stored in a memory, a part of the channel information may be selected and stored, or a part of the channel information may be changed and stored. Selecting a part of the channel information of the detected broadcasting channels or changing and storing a part of the channel information of the detected broadcasting channels will be described in more detail below.

DVB-T and DVB-T2 may not be compatible with each other. Thus, in countries where DVB-T and DVB-T2 coexist, the same content may be transmitted twice using DVB-T and DVB-T2. That is, as illustrated in FIG. 1, KBS1 may be transmitted using three broadcasting methods, that is, PAL, DVB-T, and DVB-T2. In this case, each broadcasting channel may be stored as independent channels. However, one of the broadcasting channels may be selected and stored, for example, according to users' preferences.

Accordingly, when broadcasting channels transmitting the same content are detected for different broadcasting methods, the digital broadcasting receiver according to an exemplary embodiment may select and store a broadcasting channel of a specific broadcasting method, a large-screen broadcasting channel, a mobile broadcasting channel, a broadcasting channel with higher screen resolution, a broadcasting channel with higher mobility, a broadcasting channel having specific modulation parameters, a broadcasting channel with better signal quality, or a combination thereof to which a priority order is provided. According to exemplary embodiments, two or more broadcasting channels may be selected.

Large-screen broadcasting denotes broadcasting which has high screen resolution so as to be suitable for viewing at home. According to exemplary embodiments, large-screen broadcasting is determined by whether the resolution of the broadcasting channel is above a predetermined value or whether the data transmission rate is above a predetermined value or determined by whether information indicating large-screen broadcasting is received from an external device such as a broadcasting station.

Mobile broadcasting denotes broadcasting which may be received by a mobile receiver and may be determined from modulation parameters or by receiving information indicating mobile broadcasting from an external device such as a broadcasting station.

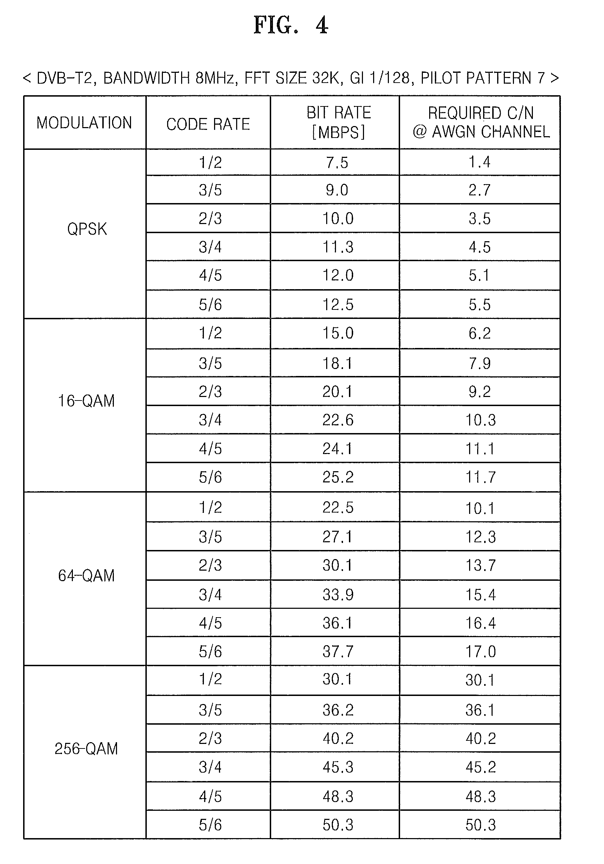

FIG. 4 is a table showing maximum rates of transmission using DVB-T2 according to an exemplary embodiment.

Referring to FIG. 4, a bit rate or a carrier-to-noise ratio for receiving quasi-error-free (QEF) may be known from modulation parameters such as bandwidth, a fast Fourier transform (FFT) size, a guard interval (GI) size, a pilot pattern, a modulation method, and a code rate. According to exemplary embodiments, whether a broadcasting channel is a mobile broadcasting channel may be determined by using the bit rate, the carrier-to-noise ratio, or a combination thereof. For example, if the bit rate is below 7 Mbps, it is determined to be mobile broadcasting.

A broadcasting channel more suitable for broadcasting to a mobile device may be defined as a broadcasting channel with a lower bit rate or a broadcasting channel that uses a modulation method advantageous for a mobile receiver. Signal quality may be determined by using strength of a received signal or a bit error rate. The modulation parameters may include a bandwidth, SISO/MISO information, a modulation method, a code rate, a bit rate, input mode A/B, an extended carrier mode, a de-jitter buffer state, an FFT size, a GI size, a pilot pattern, or the number of symbols forming a T2 frame, which is well known to one of ordinary skill in the art to which the inventive concept pertains, and thus detailed description thereof is omitted so as not to hinder the understanding of exemplary embodiments.

According to exemplary embodiments, the conditions as stated above may be combined and a priority order may be provided thereto. For example, a broadcasting channel with higher resolution is first selected; however, when a plurality of broadcasting channels with the same resolution exist, a broadcasting channel with better signal quality may be selected from among the plurality of broadcasting channels. For another example, a mobile broadcasting channel with the best signal quality may be selected.

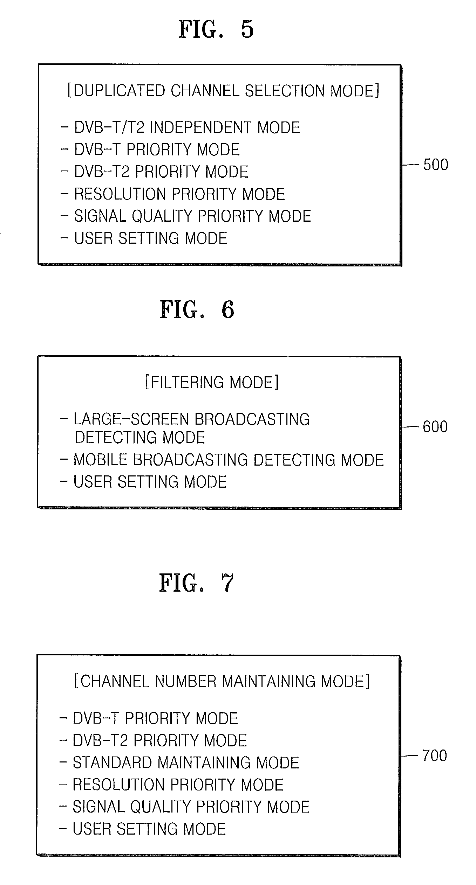

FIG. 5 illustrates a user selection menu 500 for duplicated contents according to an exemplary embodiment, wherein user selection criteria for the duplicated contents include broadcasting methods, resolution, and signal quality.

The digital broadcasting receiver according to an exemplary embodiment may select, that is, filter, and store only a part of broadcasting channels that have different contents.

For example, since it is not suitable for broadcasting channels with low resolution to be reproduced in a receiver used at home, only broadcasting channels with a particular or higher resolution or with a particular or higher transmission rate may be stored. Alternatively, broadcasting channels with stable reception quality may be suitable for a mobile receiver, instead of broadcasting channels with high resolution, and thus only broadcasting channels with a particular or below transmission rate or with a particular or above signal quality may be stored.

According to exemplary embodiments, broadcasting channels to be stored may be selected by considering a broadcasting method, resolution, mobility, modulation parameters, signal quality, content characteristics, or whether a broadcasting channel is a user preferred channel.

The content characteristics may include a content type, a rating of content, violence or provocativeness of the content, an audio language or a subtitle language of the content, recommended viewers of the content, charge of the content, or whether the content is for terrestrial broadcasting.

Accordingly, it is possible that, for example, only contents for terrestrial broadcasting or contents with ratings for all ages may be selected; however, pay channels and home shopping channels may be excluded. Content characteristics may be determined by receiving information indicating characteristics of the content from external devices such as broadcasting stations.

The user preferred channels are previously set by users of the digital broadcasting receiver so as to conveniently select and view their preferred channels, which is well-known to one of ordinary skill in the art, and thus detailed description thereof is omitted.

FIG. 6 illustrates a user selection menu 600 for broadcasting channels to be stored according to an exemplary embodiment, wherein a user selection standard for the broadcasting channels to be stored includes large-screen broadcasting and mobile broadcasting.

When a channel scan is performed while there is channel information previously stored in a memory, the digital broadcasting receiver according to an exemplary embodiment may maintain a part of the channel information that is previously stored. For example, when content of a broadcasting channel is changed to content of another broadcasting channel due to a change in a transmitting channel of a broadcasting station, a move of a user, or movement of location of a mobile receiver, the previous channel numbers may be maintained so that a user does not need to adapt to a new channel numbers or to a new channel order.

According to exemplary embodiments, a channel number of digital broadcasting may be formed of one number or a combination of a physical channel number and a broadcasting channel number. For example, in FIG. 1, the channel number for KBS1 on the physical channel 7 may be 7-1, the channel numbers for KBS1 and KBS2 on the physical channel 8 may be 8-1 and 8-2, respectively, and the channel numbers for MBC1-3 on the physical channel 9 may be 9-1, 9-2, and 9-3, respectively.

According to exemplary embodiments, the channel number may be formed of a combination of a physical channel number, a transmission stream number, and a broadcasting channel number. For example, in FIG. 1, channel numbers of KBS1 and KBS2 on the physical channel 8 may be 8-1-1 and 8-1-2, respectively, and MBC1-3 on the physical channel 9 may be 9-1-1, 9-2-1, and 9-2-2.

When the existing channel numbers are reused, the actual channel number of a broadcasting signal and the user designated channel number are different from each other and thus may be separately stored. Then, during changing channels, that is, channel zapping, either number may be used.

According to exemplary embodiments, user preferred channels may be maintained. That is, if a certain broadcasting channel was previously designated as a user preferred channel, a broadcasting channel with the same content as the user preferred channel is automatically designated as a user preferred channel after channel scanning and thus the user may not even need to re-input the user preferred channels after the channel scanning.

According to exemplary embodiments, when a plurality of broadcasting channels with same content as a previously stored broadcasting channel are found, one or more broadcasting channels are selected according to a particular condition so as to allocate the previous channel information. A broadcasting channel to which the previous channel information is allocated may be selected according to a broadcasting method, resolution, mobility, modulation parameters, signal quality, or a combination thereof to which a priority order is provided.

According to exemplary embodiments, if the selection condition for broadcasting channels to be allocated with the previous channel information for duplicated contents and the selection condition for broadcasting channels to be stored for the duplicated contents described above conflict with each other, it may be set to first apply any one of the selection conditions.

According to exemplary embodiments, when a broadcasting channel with a same content as a previously stored broadcasting channel is not found, a broadcasting channel with a similar content may be selected and existing channel information may be allocated thereto.

FIG. 7 illustrates a user selection menu 700 for a broadcasting channel in which a channel number is to be maintained according to an exemplary embodiment, wherein a user selection standard for the broadcasting channel in which a channel number is to be maintained includes broadcasting methods, resolution, and signal quality.

Unlike a general receiver, a receiver which supports a plurality of digital broadcasting methods detects a plurality of digital broadcasting method signals and thus a channel scan is time-consuming. However, the digital broadcasting receiver according to an exemplary embodiment may omit some part of detecting and thus the time for the channel scan may be reduced.

For example, if a broadcasting signal of any broadcasting method is found in one physical channel, a broadcasting signal of another broadcasting method may not be further detected for the physical channel. Accordingly, in the digital broadcasting receiver according to an exemplary embodiment, if a broadcasting channel is already found in a current physical channel during the channel scanning, further detecting of the current physical channel is omitted and a next physical channel is detected, thereby reducing the time for the channel scan.

In addition, even if a broadcasting channel is not already found in the current physical channel, some part of detecting may be omitted by using characteristics of a broadcasting signal, a transmission stream, or an ES of the current physical channel. Here, the characteristics may include broadcasting methods, resolution, mobility, modulation parameters, or signal quality.

In the digital broadcasting receiver according to an exemplary embodiment, whether a broadcasting signal of the current physical channel corresponds to a specific broadcasting method is determined, and if not, detecting processes corresponding to the broadcasting method may be omitted. If so, detecting another broadcasting method may be omitted.

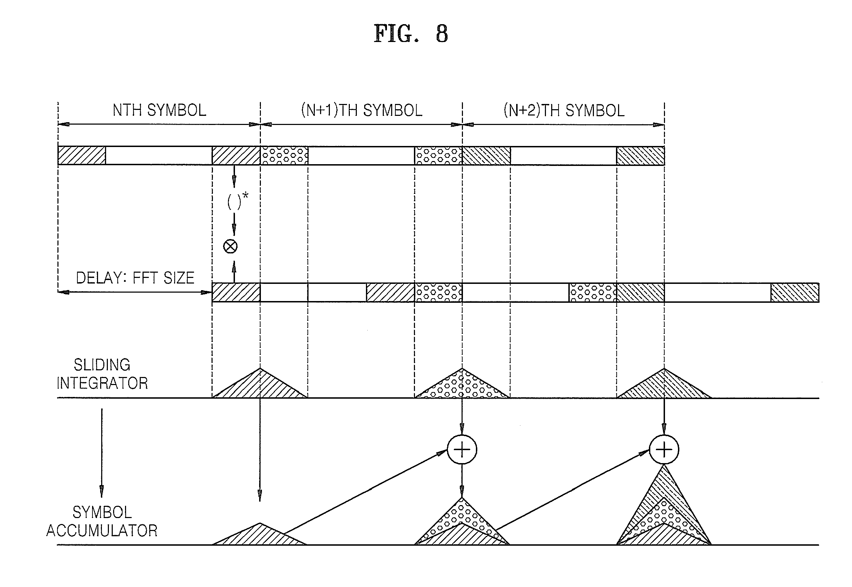

FIG. 8 schematically illustrates a method of distinguishing broadcasting signals using European terrestrial broadcasting standards DVB-T or DVB-T2, or European cable broadcasting standard DVB-C2 according to an exemplary embodiment.

DVB-T, DVB-T2, and DVB-C2 are not compatible with each other; however, DVB-T, DVB-T2, and DVB-C2 are the same in that a data symbol uses a cyclic prefix in which a guard interval is the same as the last part of a useful symbol interval. Accordingly, whether a DVB-T/T2/C2 signal is transmitted through a channel may be identified during a demodulation process by using a correlation property between the guard interval and the useful symbol interval. That is, the data symbol is delayed by an FFT size, a correlation between the data symbol delayed by an FFT size and an original symbol is obtained and is accumulated for a particular period, and then if the accumulated correlation exceeds a threshold value, it is determined that a DVB-T/T2/C2 signal is transmitted.

When it is determined that it is not a DVB-T/T2/C2 signal, detecting processes which correspond to the DVB-T/T2/C2 methods may be omitted. When it is determined that it is a DVB-T/T2/C2 signal, detecting for the DVB-T/T2/C2 methods is performed and detecting for another broadcasting method may be omitted.

In US terrestrial broadcasting 8-VSB and mobile broadcasting ATSC-M/H, transmission signals thereof periodically include a field synchronization signal and a segment synchronization signal. Accordingly, when the field synchronization signal or the segment synchronization signal is detected, the signal is an 8-VSB signal or an ATSC-M/H signal and may be previously identified during a demodulation process.

In China terrestrial broadcasting DTMB, a transmission signal thereof periodically includes a pseudo-random noise sequence (PN sequence). Accordingly, when the specific form of a PN sequence is detected, it may be previously identified that the transmission signal is a DTMB signal during a demodulation process.

The scanning time may vary according to which broadcasting method is first detected during channel scanning or which broadcasting method is first distinguished since detecting processes that are to be omitted may vary. Accordingly, the digital broadcasting receiver according to an exemplary embodiment may determine an order of detecting or distinguishing each broadcasting method according to a particular condition and thus the scanning time may be reduced.

For example, an analog broadcasting method, which can be detected quickly, is first detected and thus, the scanning time may be reduced. Also, a broadcasting method, which is quickly detected or distinguished from other broadcasting methods, is first distinguished and thus the scanning time may be reduced. In addition, a broadcasting method that is commonly used in an area where the digital broadcasting receiver is located is first detected or distinguished and thus the scanning time may be reduced. During re-scanning, a broadcasting method commonly used is first detected or distinguished by using channel information previously stored in a memory and thus the scanning time may be reduced. Moreover, a distinction by which a larger number of broadcasting methods may be distinguished is first performed and thus the scanning time may be reduced.

According to exemplary embodiments, whether quality of a received signal, mobility, various modulation parameters, and resolution satisfy a particular condition is determined during a demodulation process and detecting for a current broadcasting signal, a transmission stream, or an ES is omitted as a result of determination, thereby reducing the channel scanning time.

A general receiver outputs the number of detected analog broadcasting channels or the number of detected digital broadcasting channels to a screen after completing channel scanning; however, the digital broadcasting receiver according to an exemplary embodiment outputs the number of broadcasting contents detected for each broadcasting method and control information of the detected broadcasting channels, that is, a network identifier, a broadcasting method identifier, the number of transmission streams, a transmission stream identifier, the number of broadcasting channels, a broadcasting channel identifier, contents characteristics, resolution, mobility, modulation parameters, or signal quality, to a screen, thereby providing more information to a user. For example, the number of large-screen broadcasting contents and the number of mobile broadcasting contents from among the detected broadcasting channels may be output.

According to exemplary embodiments, the control information may be stored in a memory and may be read from the memory and output when a channel is changed while being reproduced or when a command for outputting the channel information is input.

In the digital broadcasting, the time for changing a channel is longer than in an analog broadcasting due to the time required for detecting transmission parameters. For example, it is expected that the time for changing a channel in DVB-T2 9 will take about 1.5 to 2 seconds. Such a long time causes inconvenience to a user and thus an improvement is needed.

The digital broadcasting receiver according to an exemplary embodiment stores the control information of the broadcasting channels detected during channel scanning in a memory and reproduces the broadcasting channel during changing of a channel by using the control information, thereby reducing the time for changing a channel.

For example, in second generation terrestrial broadcasting DVB-T2 in Europe, an FFT size, a guard interval size, a pilot pattern, SISO/MISO information, and the number of symbols forming a T2 frame are needed in order to successfully accomplish demodulation. The information is included in a P1 symbol and a P2 symbol and is transmitted with a period of a T2 frame. Accordingly, in order to newly acquire the information when a channel is changed, at least two T2 frames are needed. As a general rule, T2 frame has a length of 200 msec, 400 msec are required to receive two T2 frames. Thus, when the information is previously stored in a memory and is used when a channel is changed, the time for changing a channel may be reduced by as much as 400 msec.

In first generation terrestrial broadcasting DVB-T in Europe and Japanese terrestrial broadcasting ISDB-T, frame synchronization may be acquired in order to obtain modulation parameters. Accordingly, when the stored modulation parameters are used when a channel is changed, the time for changing a channel may be reduced by the time required for frame synchronization.

For example, in DVB-T, a modulation method, hierarchy information, and an inner code rate are needed for data demodulation, and the information is transmitted in transmission parameters signaling (TPS) with a period of 68 orthogonal frequency division multiplexing (OFDM) symbols. Accordingly, when these parameters are stored in a memory and are used when a channel is changed, it is not required to acquire TPS frame synchronization and thus the time may be reduced by as much as 60 msec when a channel is changed.

According to exemplary embodiments, when a broadcasting channel may not be reproduced by using the control information stored in a memory, the broadcasting channel may be reproduced by using the control information of the currently received broadcasting signal.

As described above, a part of the broadcasting channels found as a result of channel scanning may be selected according to a particular condition and stored in the memory. As broadcasting channels that are not to be stored may be reproduced by directly inputting a channel number, if control information of the broadcasting channels that are not to be stored is stored in the memory, changing a channel may be accomplished quickly.

Accordingly, in the digital broadcasting receiver according to an exemplary embodiment, the control information of all broadcasting channels found as a result of the channel scanning is stored in the memory and only the broadcasting channels selected according to a particular condition from among the found broadcasting channels are activated. Thus, only the selected broadcasting channels may be reproduced when a command for channel up/down is input. The broadcasting channels may be activated by storing active flags in a memory by each broadcasting channel or storing a list of activated broadcasting channels in a memory.

According to exemplary embodiments, when a command for deleting a stored broadcasting channel is input, the corresponding channel is set to be inactivated, instead of deleting all channel information of the corresponding broadcasting channel, and thus the deleted broadcasting channel may be reproduced quickly when the channel number is directly input.

In the digital broadcasting receiver according to an exemplary embodiment, channels may be automatically scanned when a particular condition is satisfied even if there is no command for channel scan from a user.

For example, when the channel information is changed due to creation, disappearance, or change of contents, a user may not need to perform the channel scanning manually if the channels are automatically scanned and it may be ensured that the user can view new contents. Whether the channel information has been changed may be determined by comparing the channel information of the currently received broadcasting signal with the channel information stored in the memory or by receiving information indicating a channel information change from an external device such as a broadcasting station. According to exemplary embodiments, when a channel disappears, a standby status may exist for a particular period in order to determine whether the broadcasting is temporarily suspended.

Also, when the location of the receiver is changed or a power source of the receiver is blocked and resupplied, automatic scanning is performed so that a user may not need to scan the channels manually even if the channel information is changed due to a move of the user.

When a condition for automatic scanning is satisfied while the user watches the broadcasting, automatic scanning may be performed when the user turns off the receiver in order to prevent the user from being interrupted by the automatic scanning.

According to exemplary embodiments, if a receiver includes a plurality of tuners, scanning may be performed by using an unused tuner. When a user desires to use a currently scanning tuner by starting to watch a broadcasting content or using a function of picture in picture (PIP) or electronic program guide (EPG) during automatic scanning, the result that has been scanned is temporarily stored in a memory and scanning is stopped. Then, the remaining of the scanning may be performed later when it will not disturb the user.

In the digital broadcasting receiver according to an exemplary embodiment, when manual scanning or automatic scanning is performed while a user watches a broadcasting content, a broadcasting channel which corresponds to the content that the user is watching may be automatically reproduced after completing the scanning.

When a content that a user is currently watching is not received due to a movement of a mobile receiver, the receiver should rapidly detect and reproduce the corresponding content. Thus, when the corresponding content is found during scanning, the scanning may be immediately stopped and the corresponding content may be reproduced.

According to exemplary embodiments, scanning is stopped immediately after the contents corresponding to the user preferred channels are all found, in order for the user to zap the user preferred channels, and thus the scan standby time may be reduced.

In general, channel numbers may be allocated by broadcasting stations so that similar contents are adjacent to each other; however, channel numbers may be allocated so that contents of which characteristics are significantly different from each other are adjacent to each other. For example, home shopping contents is inserted between terrestrial contents with high viewer ratings so that viewers may watch the home shopping contents while zapping terrestrial contents by using channel number up/down buttons. In this case, the viewers may desire that the channel numbers are allocated so that similar contents are adjacent to each other.

Accordingly, the digital broadcasting receiver according to an exemplary embodiment may allocate channel numbers to broadcasting channels found as a result of the scanning according to a particular order. The allocation order of channel numbers may be determined according to a broadcasting method, resolution, mobility, modulation parameters, signal quality, content characteristics, whether a broadcasting channel is a user preferred channels, or combinations thereof to which the priority order is provided. As described above, the content characteristics may include a content type, a rating of the content, violence or provocativeness of the content, an audio language or a subtitle language of the content, recommended viewers of the content, charge of the content, or whether the content is for terrestrial broadcasting.

Accordingly, a user may set the channels such that terrestrial contents are placed on lower number channels, and home shopping contents is placed on higher number channels, or broadcasting channels with high resolution or excellent reception quality are placed on lower number channels.

According to exemplary embodiments, channel numbers of specific contents are directly designated by user's input. According to exemplary embodiments, terrestrial contents, movie contents, and sport contents may be allocated with channel numbers of 0s, 10s, and 20s respectively.

The digital broadcasting receiver according to an exemplary embodiment may manage the broadcasting channels by classifying the broadcasting channels into groups according to a particular condition. The condition for classifying the broadcasting channels into groups may include a broadcasting method, resolution, mobility, modulation parameters, signal quality, content characteristics, whether a broadcasting channel is a user preferred channel, or combinations thereof to which a priority order is provided.

Various channel management such as channel scanning, storing, or deleting may be performed according to a group and all functions described herewith may be performed based on group information. For example, channel numbers of the broadcasting channels may be allocated according to the group order or channel numbers may be allocated by a combination of a group number and a broadcasting channel number in a group. According to exemplary embodiments, a user may zap channels only in specific groups by using channel number up/down buttons. According to exemplary embodiments, a user may set specific groups as user preferred groups and broadcasting channels corresponding to the user preferred groups may be designated as user preferred channels. When new broadcasting channels are found by channel scanning and when the corresponding broadcasting channels are included in the user preferred groups, the corresponding broadcasting channels may be automatically designated as user preferred channels.

The digital broadcasting receiver according to an exemplary embodiment may receive user information, that is, a user profile, and manages channels based on the user information. The user information may include a name of a user, a gender, an age, an address, a job, a country, a language, a program preference, or a user group. All functions described herewith may be performed based on the user information.

For example, when the result of channel scanning is to be stored, only contents with ratings corresponding to an age of a user may be stored, and contents recommended according to a gender, an age, residential area, or a job of a user may be allocated with the starting channel numbers or designated as preferred channels or preferred channel groups. According to exemplary embodiments, information for a plurality of users is received and channel information for each user may be separately managed.

The digital broadcasting receiver according to an exemplary embodiment may receive information related to channel setting including setting details for all functions described herewith such as broadcasting methods to be detected, detecting order of broadcasting methods, contents to be detected, a receiver providing channel information data, automatic detecting condition, broadcasting channels to be stored, duplicated contents selection condition, condition for maintaining existing channel information, channel numbers, a condition for allocating channel numbers, user preferred channels, a condition for allocating channel groups, a condition for allocating channel group numbers, user preferred channel groups, or user information, wherein the information may be received from another digital broadcasting receiver connected by a network or from a removable storage medium such as a USB memory or a SD memory. Accordingly, when a user purchases a new receiver or uses a receiver at other places than home, the user may watch broadcasting in the same channel environment as at home without separately inputting information relating to channel setting.

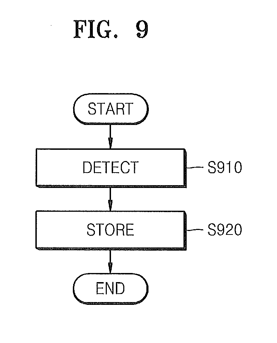

FIG. 9 is a flowchart illustrating a method of managing channels according to an exemplary embodiment of the present invention.

Referring to FIG. 9, the method of managing channels according to an exemplary embodiment includes detecting broadcasting channels corresponding to any of broadcasting methods selected from a plurality of digital broadcasting methods, in operation S910, and storing channel information of the detected broadcasting channel in a memory, in operation S920.

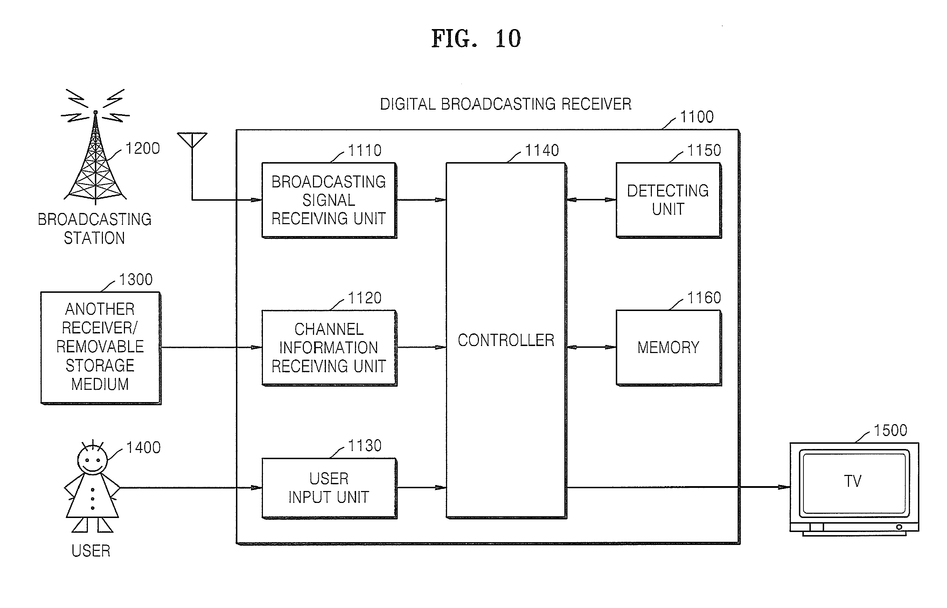

FIG. 10 is a block diagram of a digital broadcasting receiver 1100 according to an exemplary embodiment.

Referring to FIG. 10, the digital broadcasting receiver 1100 according to an exemplary embodiment includes a broadcasting signal receiving unit 1110, a channel information receiving unit 1120, a user input unit 1130, a controller 1140, a detecting unit 1150, and a memory 1160.

The broadcasting signal receiving unit 1110 receives a broadcasting signal sent with respect to each of physical channels in a reception range from a broadcasting station 1200 and the channel information receiving unit 1120 receives channel information or information relating to channel setting from another digital broadcasting receiver or a removable storage medium 1300. The user input unit 1130 receives information relating to channel setting from a user 1400, the detecting unit 1150 scans channels in the received broadcasting signal or channel information, and the controller 1140 controls the detecting unit 1150, stores the detecting result in the memory 1160, and outputs the scan result or contents reproduced from the received broadcasting signal to a display device 1500, such as a TV or a monitor.

The digital broadcasting receiver according to an exemplary embodiment provides the method of managing channels that is efficient and convenient in an environment with a plurality of digital broadcasting standards.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

As described above, exemplary embodiments are described in detail with reference to the accompanying drawings. The embodiments may be only examples and should not be construed as limiting the invention; rather, these embodiments may be considered in an explanation point of view, instead of a limitation point of view. The terminology used herein is for the purpose of describing particular exemplary embodiments only and is not intended to be limiting of exemplary embodiments. Accordingly, it should be understood, however, that there is no intent to limit exemplary embodiments to the particular forms disclosed, but on the contrary, exemplary embodiments are to cover all modifications, equivalents, and alternatives falling within the scope of the invention.

While exemplary embodiments have been particularly shown and described, it will be understood by those of ordinary skill in the art that various changes in form and details may be made therein without departing from the scope of the present invention as defined by the following claims.

## Claims

1. A method of managing channels in a digital broadcasting receiver, the method comprising:
selecting at least one broadcasting method from a plurality of digital broadcasting methods with respect to each of a plurality of physical channels in a predetermined reception range;
detecting broadcasting channels which correspond to the at least one selected broadcasting method; and
storing channel information of the detected broadcasting channels in a memory.

2. The method of claim 1, wherein the detecting the broadcasting channels comprises:
receiving channel information data from another digital broadcasting receiver by a network; and
detecting broadcasting channels which correspond to the at least one selected broadcasting method in the channel information data.

3. The method of claim 1, wherein the storing the channel information comprises storing only channel information of broadcasting channels selected according to a predetermined condition from the detected broadcasting channels.

4. The method of claim 3, wherein the predetermined condition comprises at least one of a broadcasting method, resolution, mobility, modulation parameters, signal quality, content characteristics, and whether a broadcasting channel is a user preferred channel.

5. The method of claim 4, wherein the content characteristics comprise at least one of a content type, a rating of the content, a language for the content, recommended viewers for the content, charge of the content, and whether the content is for terrestrial broadcasting.

6. The method of claim 1, wherein, if broadcasting channels with same content are detected using different broadcasting methods, only channel information of broadcasting channels selected according to a predetermined condition from the broadcasting channels with the same content is stored.

7. The method of claim 6, wherein the predetermined condition comprises at least one of a broadcasting method, resolution, mobility, modulation parameters, and signal quality, to which a priority order is provided.

8. The method of claim 1, wherein, if a broadcasting channel with same content as a broadcasting channel previously stored in the memory is detected, at least part of channel information of the broadcasting channel previously stored is stored as channel information of the detected broadcasting channel.

9. The method of claim 8, wherein the channel information comprises a channel number or whether a broadcasting channel is a user preferred channel.

10. The method of claim 1, wherein, if a broadcasting channel with same content as a broadcasting channel previously stored in the memory is not detected, at least part of channel information of the broadcasting channel previously stored is stored as channel information of the broadcasting channel with content similar to the broadcasting channel previously stored.

11. A digital broadcasting receiver comprising:
a selection unit which selects at least one broadcasting method from a plurality of digital broadcasting methods with respect to each of a plurality of physical channels in a predetermined reception range;
a detecting unit which detects broadcasting channels which correspond to the at least one broadcasting method selected by the selection unit; and
a controller which stores channel information of the detected broadcasting channels in a memory.

12. The digital broadcasting receiver of claim 11, wherein the controller stores only channel information of broadcasting channels selected according to a predetermined condition from the detected broadcasting channels.

13. The digital broadcasting receiver of claim 11, wherein the controller, when broadcasting channels with same content are detected using different broadcasting methods, stores only channel information of broadcasting channels selected according to a predetermined condition from the broadcasting channels with the same content.

14. The digital broadcasting receiver of claim 11, wherein the controller, when a broadcasting channel with same content as a broadcasting channel previously stored in the memory is detected, stores at least a part of channel information of the broadcasting channel previously stored as channel information of the detected broadcasting channel.

15. A computer readable recording medium having embodied thereon a computer program for executing the method of any one of claims 1 to 10.
